# EUROPEAN PATENT APPLICATION

(11) **EP 2 631 775 A1**
(43) Date of publication of application: **28.08.2013**
(21) Application number: 13154915.6
(22) Date of filing: 12.02.2013
(51) Int. Cl.: G06F 3/0488, G06F 3/0482, G06F 3/0485

(54) **Portable device, webpage browsing method and computer program product thereof**

(30) Priority: 23.02.2012 US 201261602366 P; 16.11.2012 US 201213679171
(71) Applicant: HTC Corporation, Taoyuan County 330 (TW)
(72) Inventor: Wu, Kun-Da, 330 Taoyuan (TW)
(74) Representative: Konkonen, Tomi-Matti Juhani

(57) **Abstract**

A portable device and a webpage browsing method thereof are provided. The webpage browsing method may be implemented in the portable device. The portable device may comprise a processor and a touch screen. The processor is configured to browse a web page in the Internet. The touch screen is electrically connected to the processor and configured to present content of the web page. The processor further controls the touch screen present at least one additional function bar to offer at least one operation option when the touch screen is touched and dragged to scroll the web page.

## Description

This application claims priority to U.S. Provisional Patent Application No.: 61/602,366 filed on February 23, 2012, which is hereby incorporated by reference in its entirety.

### CROSS-REFERENCES TO RELATED APPLICATIONS

Not applicable.

### BACKGROUND

### Field

The embodiment of the present invention relates to a portable device, a webpage browsing method and a computer program product thereof. More specifically, the present invention relates to a portable device, a webpage browsing method and a computer program product thereof that provide friendlier and useful operation options during browsing web pages.

### Descriptions of the Related Art

As people's demands on the wireless communication become increasingly higher, portable devices (e.g., mobile phones, notebook computers, tablet personal computers, or personal digital assistant) have gradually become indispensable to people's life. In order to meet the demands of people on the portable devices, portable device manufacturers all try to design the portable devices with a tendency towards more humanized or more adapted operation. Among these designs, browsing web pages on touch screen has been regarded as a necessary function for people.

One reason for the increased popularity of touch screens in portable device is their ability to simultaneously act as a user input device and a user output device. More specifically, touch screens enable a user to interact with the data that is presented to the user rather than interact with a set of separate buttons. This helps more easily browse web pages in the Internet by purely touching and dragging the touch screen. In other words, touch screens can be utilized as an intuitive method of obtaining input for potable devices.

A problem in the conventional portable devices is that function bars which can offer various operation options are always presented at a fixed position as users browse web pages on the touch screen of the conventional portable devices. In general, only one persistent header function bar adhered to the top of the web page is presented on the touch screen of the conventional portable devices as the web page is scrolled to the top thereof. Alternatively, only one persistent bottom function bar adhered to the bottom of the web page is presented on the touch screen of the conventional portable devices as the web page is scrolled to the bottom thereof. Therefore, if users want to execute other operation options on the touch screen during browsing a web page, the only method is touching the touch screen and scrolling the web page to the top or the bottom thereof to present the function bars adhered to the top or the bottom of the web page for the wanted operations.

In view of this, efforts still have to be made in the art to solve the problem of the conventional portable devices in which uses of the function bars are not friendly and useful enough to meet the demands that users can execute any wanted operations at any time during browsing web pages.

### SUMMARY

An objective of the present invention is to provide a portable device, a webpage browsing method and a computer program product thereof that offer friendlier and useful operation options during browsing web pages. The objective is achieved by the features of the independent claims. Other embodiments are characterised by dependent claims. In an embodiment of the present invention, at least one additional function bar is dynamically presented on the touch screen of the portable device to offer at least one operation options for wanted operations as users touch and drag the touch screen during browsing web pages. Therefore, the embodiment of the present invention can effectively solve the problem of the conventional portable devices in which uses of the function bars are not friendly and useful enough to meet the demands that users can execute any wanted operations at any time during browsing web pages.

To achieve the aforesaid objective according to an embodiment, a portable device is disclosed. The portable device comprises a processor and a touch screen. The processor is configured to browse a web page in the Internet. The touch screen is electrically connected to the processor. The processor is further configured to control the touch screen to present at least one additional function bar when the touch screen is touched and dragged to scroll the web page, and the at least one additional function bar is configured to offer at least one operation option.

To achieve the aforesaid objective according to another embodiment, a webpage browsing method for a portable device is disclosed. The portable device comprising a processor and a touch screen electrically connected to the processor, the webpage browsing method comprising the steps of: (a) browsing a web page in the Internet by the processor; and (b) controlling the touch screen to present at least one additional function bar by the processor when the touch screen is touched and dragged to scroll the web page, wherein the at least one additional function bar is configured to offer at least one operation option.

The detailed technology and preferred embodiments implemented for the present invention are described in the following paragraphs accompanying the appended drawings for people skilled in this field to well appreciate the features of the claimed invention.

### BRIEF DESCRIPTION OF THE DRAWINGS

FIG. 1 is a schematic view depicting a portable device according to the first embodiment of the present invention;
FIG. 2A-2F are schematic views depicting various conditions of presenting additional function bars on a touch screen of the portable device according to the first embodiment of the present invention;
FIG. 3 is a flow chart of a webpage browsing method according to the second embodiment of the present invention.

### DESCRIPTION OF THE PREFERRED EMBODIMENT

In the following description, the present invention will be explained with reference to embodiments thereof. However, these embodiments are not intended to limit the present invention to any specific environment, applications or particular implementations described in these embodiments. The following description of these embodiments is only for the purpose of illustration rather than to limit the present invention. Furthermore, it should be appreciated that in the following embodiments and the attached drawings, elements not directly related to the present invention are omitted from depiction; and dimensional relationships among individual elements in the attached drawings are illustrated only for ease of understanding, but not to limit the actual scale.

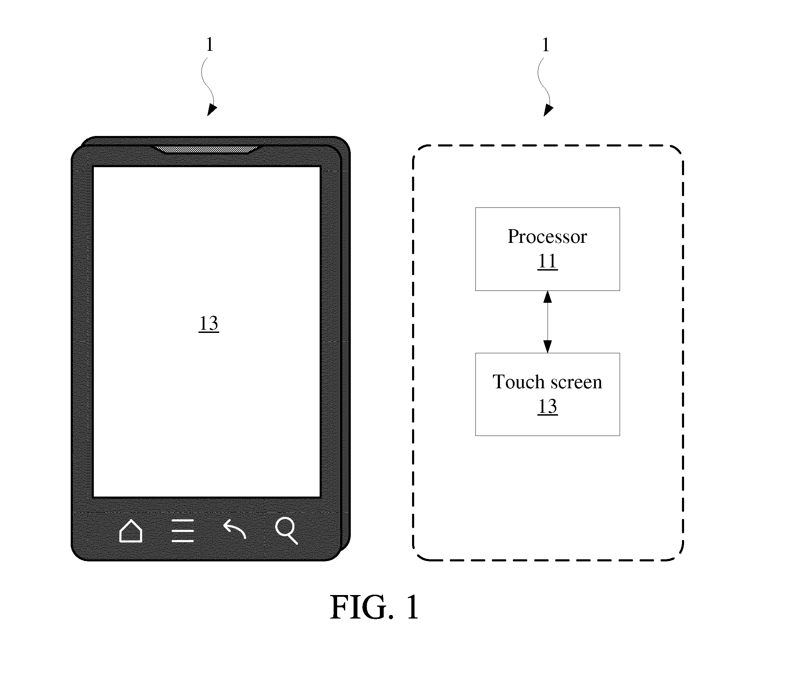

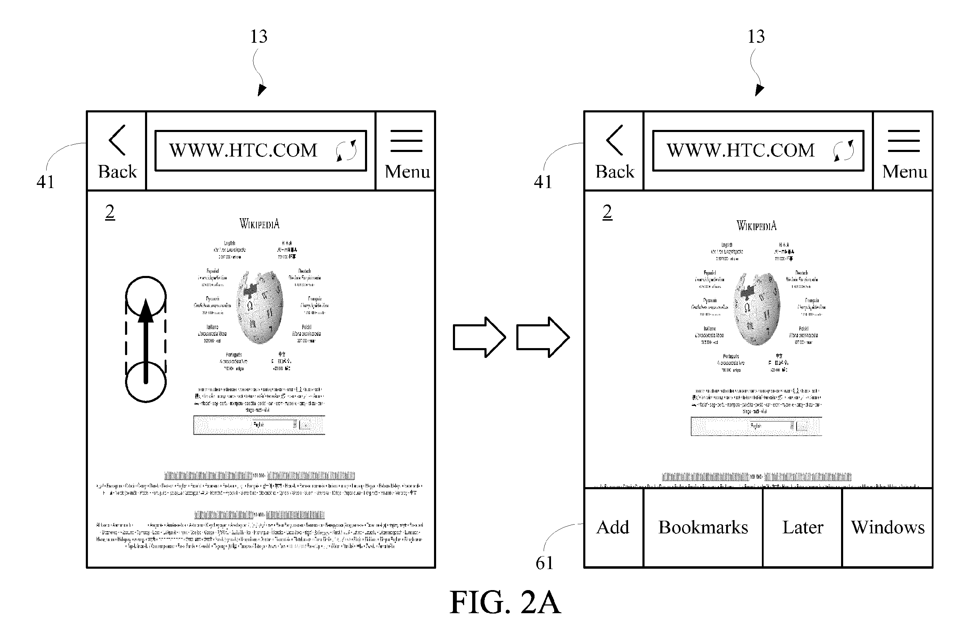

The first embodiment of the present invention is shown in FIG. 1 and FIGs. 2A-2F. Specifically, FIG. 1 is a schematic view depicting a portable device 1 according to the first embodiment of the present invention, and FIGs. 2A-2F are schematic views depicting various conditions of presenting additional function bars on a touch screen of the portable device 1 according to the first embodiment of the present invention.

As shown in FIG. 1, the portable device 1 comprising a processor 11 and a touch screen 13 electrically connected to the processor 11 is a form of smart phone, and other elements thereof such as a communication module, a power supply module and an antenna module are all omitted from depiction for the purpose of simplicity. The processor 11 is configured to browse a web page in the Internet, and the touch screen 13 is configured to present content of the web page. It should be appreciated that the portable device 1 may also be other forms such as notebook computers, tablet personal computers, or personal digital assistant.

The method in which the processor 11 controls the touch screen 13 to present at least one additional function bar when the touch screen 13 is touched and dragged to scroll a web page will be described accompanying the depictions of FIGs. 2A-2F as in different conditions hereinafter. The at least one additional function bar is configured to offer at least one operation option, and numbers and categories of the at least one operation option offered by the at least one additional function bar may be designed according to the user's demands. It is assumed that the processor 11 is browsing a web page 2 and the touch screen 13 is presenting the content of the web page 2. In addition, a persistent header function bar 41 adhered to the top of the web page 2 is assumed for a general case.

FIG. 2A is shown in a condition that the web page 2 is scrolled to the top thereof. FIG. 2A shows that when the touch screen 13 is touched and dragged up the touch screen 13 will present an additional overlay bottom function bar 61 at the bottom thereof. In this condition, the additional overlay bottom function bar 61 is opposite to the persistent header function bar 41, and the additional overlay bottom function bar 61 will be brought up for a while and hide time out in a limited time, which looks like the top of the web page 2 is over-scrolled. The timing and animation of the additional overlay bottom function bar 61 may be designed according to user's demands. It should be appreciated that when the touch screen 13 is touched and dragged towards other directions such as the down, the left, the right, the upper right or the lower left in a condition that the web page 2 is scrolled to the top thereof, the touch screen 13 may also present the additional overlay bottom function bar 61 at the bottom thereof in other embodiments.

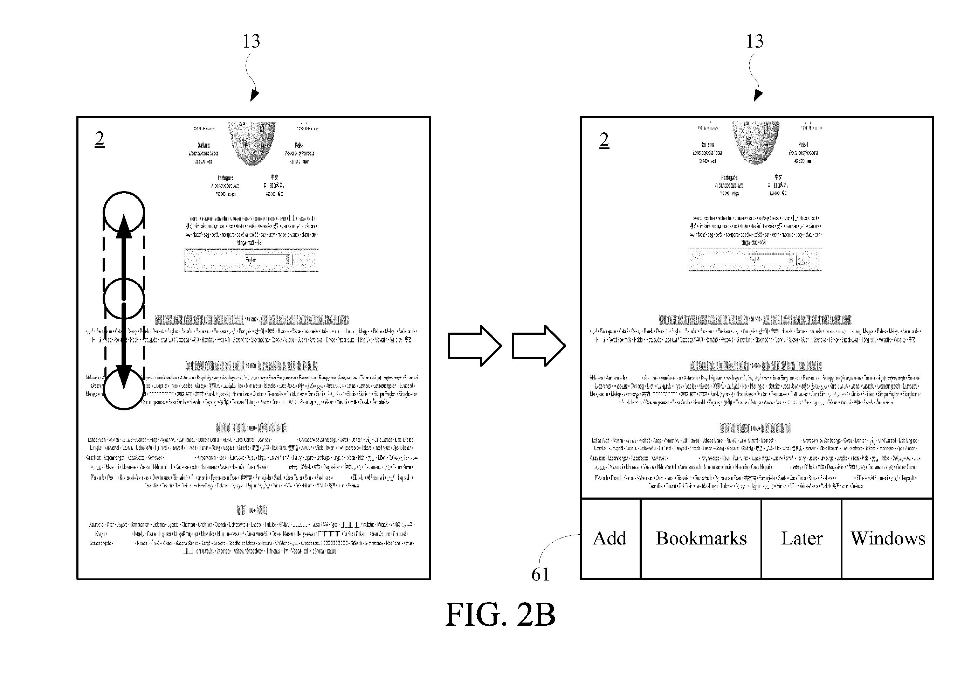

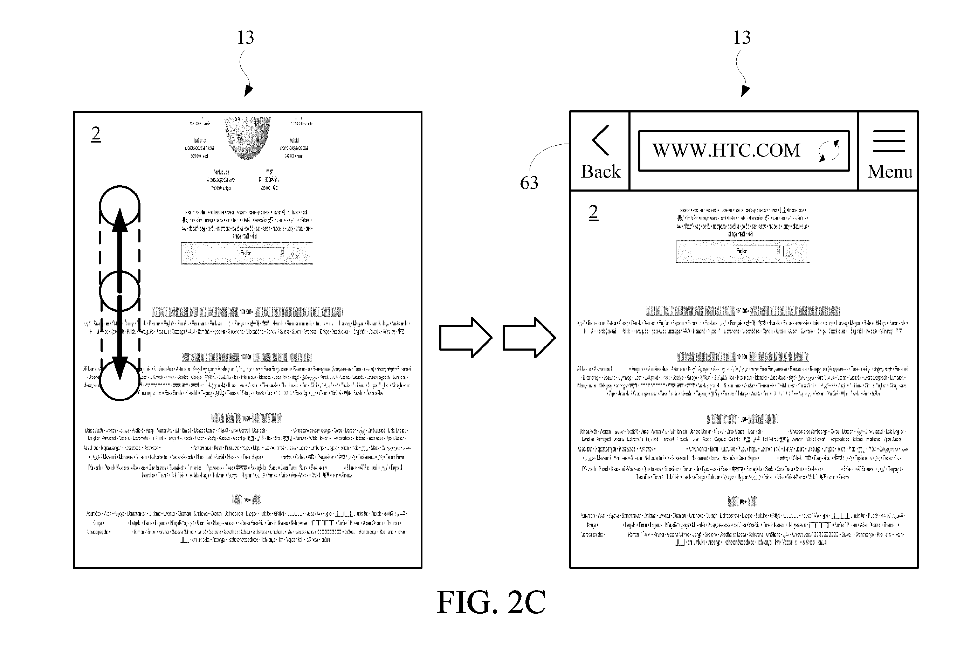

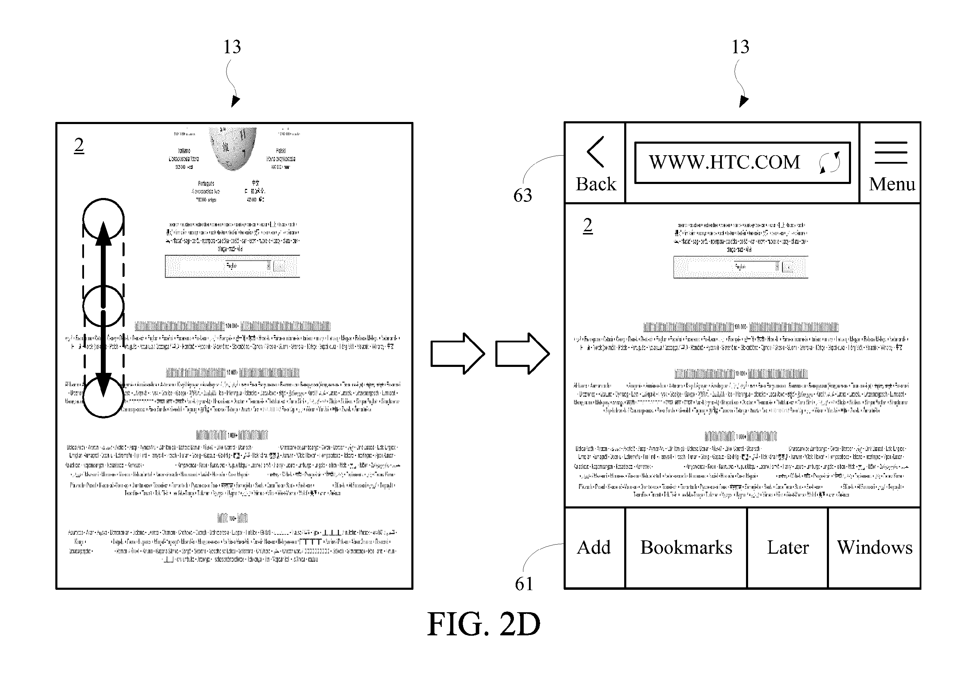

FIG. 2B, FIG. 2C and FIG. 2D all are shown in a condition that the web page 2 is scrolled to the middle thereof. FIG. 2B shows that when the touch screen 13 is touched and dragged up or down, the touch screen 13 may present the additional overlay bottom function bar 61 at the bottom thereof. Alternatively, FIG. 2C shows that when the touch screen 13 is touched and dragged up or down, the touch screen 13 may present an additional overlay header function bar 63 at the top thereof. The additional overlay header function bar 63 may offer the same operation options like the persistent header function bar 41, and it overlay a part of the web page 2. The other situation is shown in FIG. 2D, in which when the touch screen 13 is touched and dragged up or down, the touch screen 13 may simultaneously present the additional overlay bottom function bar 61 at the bottom thereof and the additional overlay header function bar 63 at the top thereof.

In this condition, the additional overlay bottom function bar 61 and/or the additional overlay header function bar 63 shown in FIGs. 2B-2D will be brought up for a while and hide time out in a limited time. The timing and animation of the additional overlay bottom function bar 61 and the additional overlay header function bar 63 may be designed according to user's demands. Likewise, it should be appreciated that when the touch screen 13 is touched and dragged towards other directions such as the left, the right, the upper right or the lower left in a condition that the web page 2 is scrolled to the middle thereof, the touch screen 13 may also present the additional overlay bottom function bar 61 at the bottom or the top thereof, present the additional overlay header function bar 63 at the top thereof, or simultaneously present the additional overlay bottom function bar 61 at the bottom thereof and the additional overlay header function bar 63 at the top thereof in other embodiments.

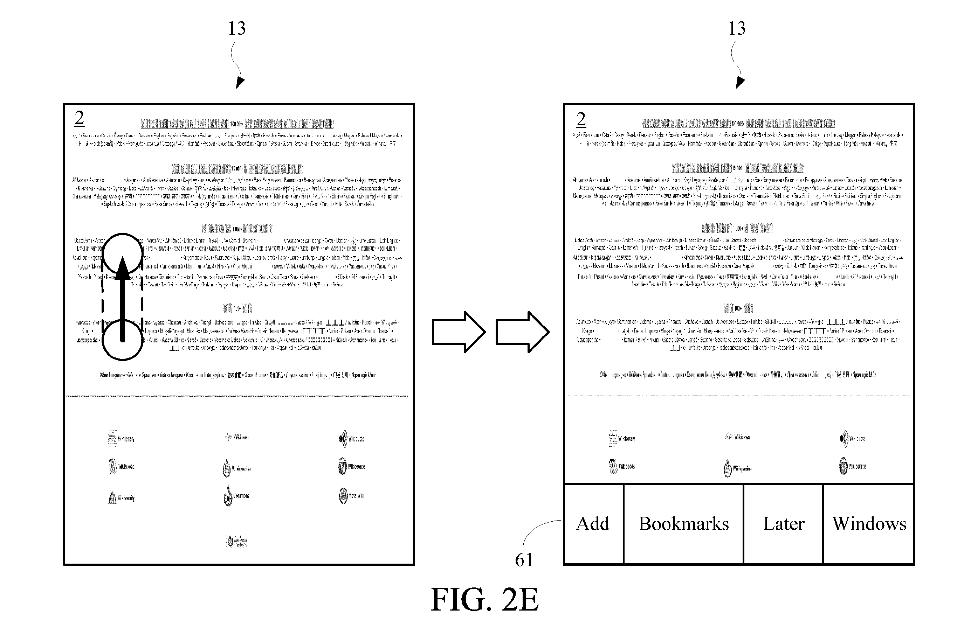

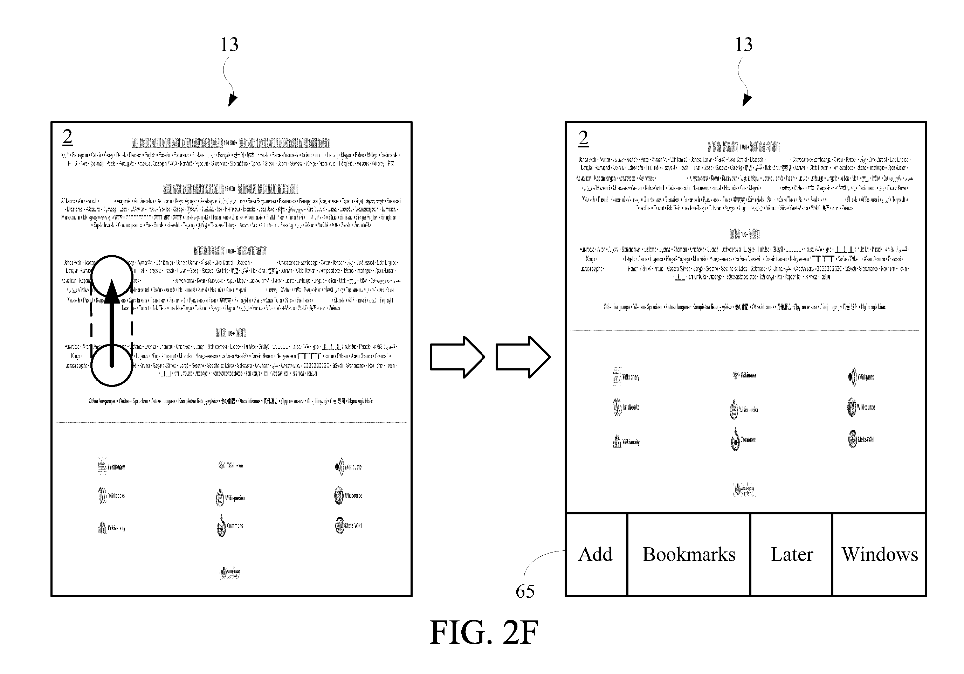

FIG. 2E and FIG. 2F both are shown in a condition that the web page 2 is scrolled to the bottom thereof. FIG. 2E shows that when the touch screen 13 is touched and dragged up, the touch screen 13 may present the additional overlay bottom function bar 61 at the bottom thereof. Alternatively, FIG. 2E shows that when the touch screen 13 is touched and dragged up, the touch screen 13 may present an additional attached bottom function bar 65 adhered to the bottom of the web page. The additional attached bottom function bar 65 may be always hidden before the touch screen 13 is touched and dragged up.

In this condition, the additional overlay bottom function bar 61 and the additional overlay header function bar 63 shown in FIGs. 2E-2F respectively will be brought up for a while and hide time out in a limited time, which looks like the bottom of the web page 2 is over-scrolled. The timing and animation of the additional overlay bottom function bar 61 and the additional overlay header function bar 63 may be designed according to user's demands. Likewise, it should be appreciated that when the touch screen 13 is touched and dragged towards other directions such as the down, the left, the right, the upper right or the lower left in a condition that the web page 2 is scrolled to the bottom thereof, the touch screen 13 may also present the additional overlay bottom function bar 61 or the additional overlay header function bar 63 in other embodiments.

The description associated with FIGs. 2A-2F is one preferred implement of the various embodiments according to the present invention, and it should not be regarded as a limitation to the present invention.

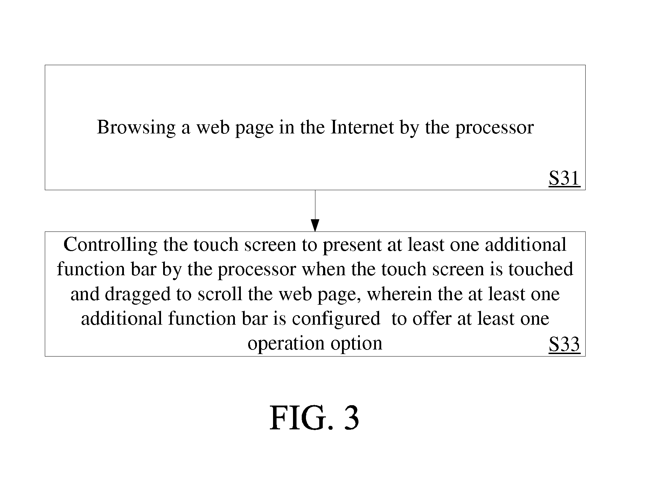

The second embodiment of the present invention is shown in FIG. 3, which is a flow chart of a webpage browsing method according to the second embodiment of the present invention. The webpage browsing method of the second embodiment is applied to a portable device which may be regarded as the portable device 1 of the first embodiment. Therefore, the portable device as described in the second embodiment may comprise a processor and a touch screen.

The webpage browsing method described in this embodiment may also be implemented by a computer program product. When the computer program product is loaded into a computer, a plurality of codes comprised in the computer program product will be executed by the computer to accomplish the webpage browsing method of this embodiment. The computer program product may be embodied in a non-transitory tangible computer readable medium, such as a read only memory (ROM), a flash memory, a floppy disk, a hard disk, a compact disk (CD), a mobile disk, a magnetic tape, a database accessible to networks or any other storage media with the same function and well known to those skilled in the art.

Referring to FIG. 3, step S31 is executed by the portable device to browse a web page in the Internet by the processor. Step S33 is executed by the portable device to control the touch screen to present at least one additional function bar by the processor when the touch screen is touched and dragged to scroll the web page, wherein the at least one additional function bar is configured to offer at least one operation option.

It should be appreciated that the second embodiment can also implement all the operations and the functions described in the first embodiment except the aforesaid interpretations. Furthermore, the method in which the second embodiment implements these operations and functions will be readily appreciated by those of ordinary skill in the art based on the explanation of the first embodiment.

According to the above descriptions, the portable device, webpage browsing method and a computer program product thereof of the embodiment of present invention can dynamically present at least one additional function bar on the touch screen thereof to offer at least operation options for wanted operations as users touch and drag the touch screen during browsing web pages. Therefore, the embodiment of the present invention indeed effectively solve the problem of the conventional portable devices in which uses of the function bars are not friendly and useful enough to meet the demands that users can execute any wanted operations at any time during browsing web pages. In other words, the embodiment of the present invention has provided a portable device, a webpage browsing method and a computer program product thereof that can offer friendlier and more useful operation options during browsing web pages.

The above disclosure is related to the detailed technical content and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A portable device, comprising:
a processor, being configured to browse a web page in the Internet; and
a touch screen, being electrically connected to the processor;
wherein the processor is further configured to control the touch screen to present at least one additional function bar when the touch screen is touched and dragged to scroll the web page, and the least one additional function bar is configured to offer at least one operation option.

2. The portable device as claimed in Claim 1, wherein the at least one additional function bar is presented for a limited time.

3. The portable device as claimed in Claim 1, wherein the touch screen presents an additional overlay bottom function bar at the bottom thereof when the touch screen is touched and dragged up in a condition that the web page is scrolled to the top thereof, and the additional overlay bottom function bar is opposite to a persistent header function bar adhered to the top of the web page.

4. The portable device as claimed in Claim 1, wherein the touch screen presents an additional overlay bottom function bar at the bottom thereof when the touch screen is touched and dragged up in a condition that the web page is scrolled to the middle thereof.

5. The portable device as claimed in Claim 1, wherein the touch screen presents an additional overlay header function bar at the top thereof when the touch screen is touched and dragged down in a condition that the web page is scrolled to the middle thereof.

6. The portable device as claimed in Claim 1, wherein the touch screen simultaneously presents an additional overlay header function bar at the top thereof and an additional overlay bottom function bar at the bottom thereof when the touch screen is touched and dragged in a condition that the web page is scrolled to the middle thereof.

7. The portable device as claimed in Claim 1, wherein the touch screen presents an additional overlay bottom function bar at the bottom thereof when the touch screen is touched and dragged up in a condition that the web page is scrolled to the bottom thereof.

8. The portable device as claimed in Claim 1, wherein the touch screen presents an additional attached bottom function bar adhered to the bottom of the web page when the touch screen is touched and dragged up in a condition that the web page is scrolled to the bottom thereof.

9. A webpage browsing method for a portable device, the portable device comprising a processor and a touch screen electrically connected to the processor, the webpage browsing method comprising the steps of:
(a) browsing a web page in the Internet by the processor; and
(b) controlling the touch screen to present at least one additional function bar by the processor when the touch screen is touched and dragged to scroll the web page, wherein the least one additional function bar is configured to offer at least one operation option.

10. The webpage browsing method as claimed in Claim 9, wherein the at least one additional function bar is presented for a limited time.

11. The webpage browsing method as claimed in Claim 9, wherein the step (c) further comprising the step of:
(c1) presenting an additional overlay bottom function bar at the bottom of the touch screen when the touch screen is touched and dragged up in a condition that the web page is scrolled to the top thereof, the additional overlay bottom function bar is opposite to a persistent header function bar adhered to the top of the web page.

12. The webpage browsing method as claimed in Claim 9, wherein the step (c) further comprising the step of:
(c2) presenting an additional overlay bottom function bar at the bottom of the touch screen when the touch screen is touched and dragged up in a condition that the web page is scrolled to the middle thereof.

13. The webpage browsing method as claimed in Claim 9, wherein the step (c) further comprising the step of:
(c3) presenting an additional overlay header function bar at the top of the touch screen when the touch screen is touched and dragged down in a condition that the web page is scrolled to the middle thereof.

14. The webpage browsing method as claimed in Claim 9, wherein the step (c) further comprising the step of:
(c4) simultaneously presenting an additional overlay header function bar at the top of the touch screen and an additional overlay bottom function bar at the bottom of the touch screen when the touch screen is touched and dragged in a condition that the web page is scrolled to the middle thereof.

15. The webpage browsing method as claimed in Claim 9, wherein the step (c) further comprising the step of:
(c5) presenting an additional overlay bottom function bar at the bottom of the touch screen when the touch screen is touched and dragged up in a condition that the web page is scrolled to the bottom thereof.

16. The webpage browsing method as claimed in Claim 9, wherein the step (c) further comprising the step of:
(c6) presenting an additional attached bottom function bar adhered to the bottom of the web page on the touch screen when the touch screen is touched and dragged up in a condition that the web page is scrolled to the bottom thereof.

17. A computer program product, comprising a set of programmable means configured to perform the steps of the method of any preceding claim 9-16.
